# EUROPEAN PATENT APPLICATION

(11) **EP 4 318 116 A1**
(43) Date of publication of application: **07.02.2024**
(21) Application number: 22780483.8
(22) Date of filing: 24.03.2022
(51) Int. Cl.: G02F 1/1524, C09K 9/00, G02F 1/15

(54) **ELECTROCHROMIC ELEMENT AND PRODUCTION METHOD FOR SAME**

(30) Priority: 29.03.2021 JP 2021055373
(71) Applicant: NITTO DENKO CORPORATION, Ibaraki-shi Osaka 567-8680 (JP)
(72) Inventor: WATANABE, Kenta, Ibaraki-shi, Osaka 567-8680 (JP); OGASAWARA, Akiko, Ibaraki-shi, Osaka 567-8680 (JP)
(74) Representative: Hoffmann Eitle
(86) International application number: PCT/JP2022/014028
(87) International publication number: WO 2022/210269

(57) **Abstract**

An electrochromic element (10) includes a first transparent electrode layer (12), an oxidation color development layer (15), an electrolyte layer (16) and a second transparent electrode layer (17) in this order. The oxidation color development layer (15) is an oxide layer or a hydroxide layer, and contains nickel as a main component, and metal elements other than nickel. The oxidation color development layer (15) has a thickness of 20 nm or more. The first transparent electrode layer (12) and the oxidation color development layer (15) are in contact with each other. The oxidation color development layer (15) and the electrolyte layer (16) are in contact with each other. The oxidation color development layer (15) includes a near-electrolyte layer (15a) and a near-electrode layer (15b). The porosity of the near-electrolyte layer (15a) is larger than the porosity of the near-electrode layer (15b).

## Description

### TECHNICAL FIELD

The present invention relates to an electrochromic element and a method for manufacturing the electrochromic element.

### BACKGROUND ART

The electrochromic phenomenon is a phenomenon in which by induction of a reversible electrochemical reaction (oxidation reaction or reduction reaction) developed during application of voltage between a pair of electrode layers, a light absorption region of a substance is changed, so that the substance is colored or decolored. An electrochemical coloring and decoloring element utilizing such an electrochromic phenomenon is referred to as an electrochromic element. The electrochromic element is expected to be applied to a window material or the like as a light control element that changes the light transmittance. In particular, an electrochromic element is desired which has a large difference between light transmittances in a decolored state and in a colored state (hereinafter, sometimes referred to simply as a "light transmittance difference"), and is capable of responding at high speed.

For example, Patent Document 1 discloses an electrochromic element capable of responding at high speed, the electrochromic element being provided with an electrochromic material layer having a nanostructure.

### PRIORART DOCUMENTS

### PATENT DOCUMENT

Patent Document 1: Japanese Translation of PCT International Application Publication No. 2016-527559

### SUMMARY OF THE INVENTION

### PROBLEMS TO BE SOLVED BY THE INVENTION

However, the technique described in Patent Document 1 still has room for improvement in increasing a light transmittance difference.

In view of the above-mentioned problem, an object of the present invention is to provide an electrochromic element having a large light transmittance difference, and a method for manufacturing the electrochromic element.

### MEANS FOR SOLVING THE PROBLEMS

An electrochromic element according to the present invention is an electrochromic element in which the light transmittance changes depending on a voltage applied, and the electrochromic element includes a first transparent electrode layer, an oxidation color development layer, an electrolyte layer and a second transparent electrode layer in this order. The first transparent electrode layer and the oxidation color development layer are in contact with each other. The oxidation color development layer and the electrolyte layer are in contact with each other. The oxidation color development layer is an oxide layer or a hydroxide layer, and contains nickel as a main component, and metal elements other than nickel. The oxidation color development layer has a thickness of 20 nm or more. In the oxidation color development layer, a porosity of a near-electrolyte layer extending up to 10 nm in a thickness direction from an interface with the electrolyte layer is larger than a porosity of a near-electrode layer extending up to 10 nm in the thickness direction from the interface with the first transparent electrode layer.

In an electrochromic element according to an embodiment of the present invention, the oxidation color development layer contains one or more elements selected from the group consisting of Group 1 elements, Group 4 elements, Group 5 elements, Group 6 elements, Group 7 elements, Group 9 elements, Group 11 elements, Group 13 elements and Group 14 elements of the periodic table as the metal elements other than nickel.

In an electrochromic element according to an embodiment of the present invention, the oxidation color development layer contains one or more elements selected from the group consisting of lithium, sodium, potassium, titanium, zirconium, vanadium, niobium, chromium, molybdenum, manganese, cobalt, rhodium, iridium, copper, aluminum and silicon as the metal elements other than nickel.

In an electrochromic element according to an embodiment of the present invention, the near-electrolyte layer comprises a plurality of needle-shaped structures.

In an electrochromic element according to an embodiment of the present invention, a surface of the electrolyte layer on the oxidation color development layer side has an irregular shape.

In an electrochromic element according to an embodiment of the present invention, a difference between the porosity of the near-electrolyte layer Pi and the porosity of the near-electrode layer P₂, P₁-P₂, is 1.0% or more.

In an electrochromic element according to an embodiment of the present invention, the electrochromic element further includes a reduction color development layer disposed between the electrolyte layer and the second transparent electrode layer. The reduction color development layer is, for example, a tungsten oxide layer.

In an electrochromic element according to an embodiment of the present invention, the electrolyte layer is an oxide layer, a hydroxide layer, a nitride layer, or a fluoride layer, and contains one or more elements selected from the group consisting of aluminum, silicon, tantalum, yttrium, calcium, magnesium, titanium, zirconium and lithium.

A method for manufacturing the electrochromic element according to the present invention, the method includes the steps of forming the oxidation color development layer on the first transparent electrode layer by a sputtering method, and forming the electrolyte layer on the oxidation color development layer by a sputtering method.

### EFFECT OF THE INVENTION

According to the present invention, it is possible to provide an electrochromic element having a large light transmittance difference, and a method for manufacturing the electrochromic element.

### BRIEF DESCRIPTION OF THE DRAWINGS

FIG. 1 is a sectional view showing an example of an electrochromic element according to the present invention.
FIG. 2 is an enlarged sectional view showing another example of an electrochromic element according to the present invention.
FIG. 3 is a sectional view showing another example of an electrochromic element according to the present invention.
FIG. 4 is a photograph of a cross-section of an electrochromic element of Example 1 which is taken using a transmission electron microscope.
FIG. 5 is a photograph of a cross-section of an electrochromic element of Example 2 which is taken using a transmission electron microscope.
FIG. 6 is a photograph of a cross-section of an electrochromic element of Comparative Example 1 which is taken using a transmission electron microscope.
FIG. 7 is a photograph of a cross-section of an electrochromic element of Example 8 which is taken using a transmission electron microscope.

### MODE FOR CARRYING OUT THE INVENTION

Hereinafter, preferred embodiments of the present invention will be described. First, terms used herein will be described. The term "oxidation color development layer" refers to a layer formed of a material that is colored by an oxidation reaction. The term "reduction color development layer" refers to a layer formed of a material that is colored by a reduction reaction.

Unless otherwise specified, the term "main component" of a material means a component contained in the material in the largest amount on a weight basis. The term "atomic composition ratio" means a ratio of the number of atoms. The term "composite oxide" means a composite of oxides of two or more elements. The term "composite hydroxide" means a composite of hydroxides of two or more elements. Herein, silicon is taken as a metal.

The thickness of each of a transparent electrode layer, a reduction color development layer, an electrolyte layer and an oxidation color development layer is represented by an arithmetic average value of 10 measured values obtained by observing a cross-section of the layer cut in a thickness direction with a transmission electron microscope (TEM), selecting 10 measurement points at random from the cross-sectional image, and measuring thicknesses at the 10 selected measurement points.

The term "periodic table" refers to a long format of the periodic table of elements which is based on the provisions of IUPAC (International Union of Pure and Applied Chemistry). The unit of flow rate "sccm (standard cubic centimeter per minute)" is the unit of flow rate "mL/min" in the standard state (0°C, 101.3 kPa).

### <First embodiment: electrochromic element>

An electrochromic element according to a first embodiment of the present invention is an electrochromic element in which the light transmittance changes depending on a voltage applied, and the electrochromic element including a first transparent electrode layer, an oxidation color development layer, an electrolyte layer, and a second transparent electrode layer in this order. The first transparent electrode layer and the oxidation color development layer are in contact with each other. The oxidation color development layer and the electrolyte layer are in contact with each other. The oxidation color development layer is an oxide layer or a hydroxide layer, and contains nickel as a main component, and metal elements other than nickel. The thickness of the oxidation color development layer is 20 nm or more. The oxidation color development layer includes a near-electrolyte layer and a near-electrode layer. The near-electrolyte layer is a region extending up to 10 nm in the thickness direction of the oxidation color development layer from an interface between the oxidation color development layer and the electrolyte layer. The near-electrode layer is a region extending up to 10 nm in the thickness direction of the oxidation color development layer from the interface between the oxidation color development layer and the first transparent electrode layer. The porosity of the near-electrolyte layer is larger than the porosity of the near-electrode layer.

The electrochromic element according to the first embodiment has a light transmittance difference. The reason for this is presumed as follows.

In the electrochromic element according to the first embodiment, the near-electrolyte layer in the vicinity of the interface between the oxidation color development layer and the electrolyte layer is a region that has an impact on the ion conductivity between the oxidation color development layer and the electrolyte layer. On the other hand, in the electrochromic element according to the first embodiment, the near-electrode layer in the vicinity of the interface between the oxidation color development layer and the first transparent electrode layer is a region that has an impact on the electron conductivity between the oxidation color development layer and the first transparent electrode layer. The electrochromic element according to the first embodiment is excellent in balance between the ion conductivity and the electron conductivity because the porosity of the near-electrolyte layer is larger than the porosity of the near-electrode layer. Thus, the electrochromic element according to the first embodiment has a large light transmittance difference because the oxidation reaction is accelerated in transition of the oxidation color development layer from a decolored state to a colored state.

Hereinafter, the first embodiment will be described in detail with reference to the drawings. In the drawings, mainly relevant components are schematically shown for easy understanding, and the size, the number, the shape and the like of each illustrated component may be different from the actual counterparts for convenience of preparing the drawings. Herein, for convenience of description, there may be cases where in the drawings that are described later, the same component parts as those in the drawings described previously are given the same symbols, and descriptions thereof are omitted.

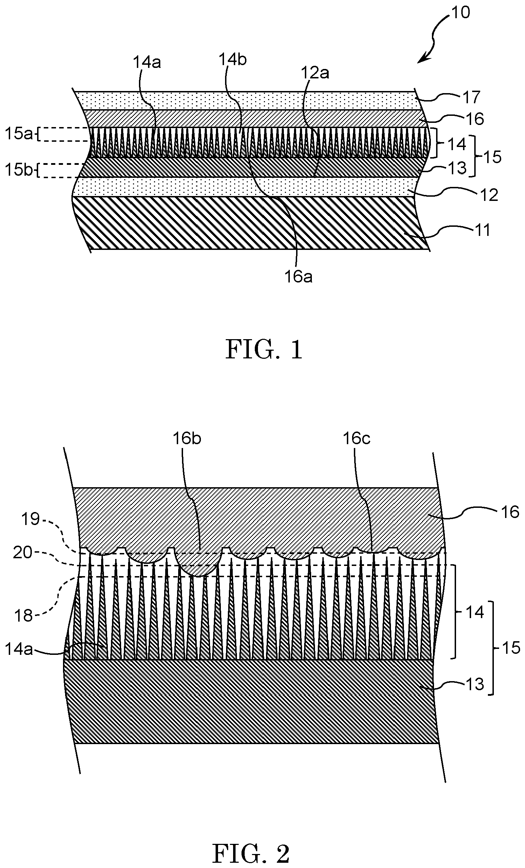

FIG. 1 is a sectional view showing an example of the electrochromic element according to the first embodiment. As shown in FIG. 1, an electrochromic element 10 is a laminate including a transparent support base material 11, a first transparent electrode layer 12, an oxidation color development layer 15, an electrolyte layer 16 and a second transparent electrode layer 17 in this order. In the electrochromic element 10, the transmittance of light (for example, light having a wavelength of 400 nm or more and 1,200 nm or less) changes depending on a voltage applied between the first transparent electrode layer 12 and the second transparent electrode layer 17.

The oxidation color development layer 15 includes a dense layer 13 disposed on the first transparent electrode layer 12 side and a needle-shaped structure layer 14 disposed on the electrolyte layer 16 side. The needle-shaped structure layer 14 includes a plurality of needle-shaped structures 14a.

The oxidation color development layer 15 (specifically, the dense layer 13 and the needle-shaped structure layer 14) is an oxide layer or a hydroxide layer. In addition, the oxidation color development layer 15 contains nickel as a main component, and metal elements other than nickel. The thickness of the oxidation color development layer 15 is 20 nm or more.

The first transparent electrode layer 12 and the oxidation color development layer 15 are in contact with each other. The oxidation color development layer 15 and the electrolyte layer 16 are in contact with each other. The oxidation color development layer 15 includes a near-electrolyte layer 15a and a near-electrode layer 15b. The near-electrolyte layer 15a is a region extending up to 10 nm in the thickness direction of the oxidation color development layer 15 from an interface 16a between the oxidation color development layer 15 and the electrolyte layer 16. The near-electrode layer 15b is a region extending up to 10 nm in the thickness direction of the oxidation color development layer 15 from the interface 12a between the oxidation color development layer 15 and the first transparent electrode layer 12. An interface 16a between the oxidation color development layer 15 and the electrolyte layer 16 is a surface of the electrolyte layer 16 on the oxidation color development layer 15 side. The interface 12a between the oxidation color development layer 15 and the first transparent electrode layer 12 is a surface of the first transparent electrode layer 12 on the oxidation color development layer 15 side. The thickness of the oxidation color development layer 15 is the interval between the interface 12a and the interface 16a.

The porosity of the near-electrolyte layer 15a is larger than the porosity of the near-electrode layer 15b. The method for measuring the porosity of the near-electrolyte layer 15a and the porosity of the near-electrode layer 15b is identical or similar to that in examples described later.

In the electrochromic element 10 shown in FIG. 1, the near-electrolyte layer 15a is a part of the needle-shaped structure layer 14. The near-electrolyte layer 15a includes a plurality of needle-shaped structures 14a. In the electrochromic element 10 shown in FIG. 1, the near-electrode layer 15b is a part of the dense layer 13 having a dense structure.

In the near-electrolyte layer 15a, a plurality of voids 14b are formed in gaps between a plurality of needle-shaped structures 14a. Thus, the porosity of the near-electrolyte layer 15a is larger than the porosity of the near-electrode layer 15b which is a part of the dense layer 13. For obtaining an electrochromic element having high adhesion between the oxidation color development layer 15 and the electrolyte layer 16 and a higher light transmittance difference, the porosity of the near-electrolyte layer 15a is preferably 1.0% or more and 50.0% or less, more preferably 2.0% or more and 40.0% or less. For obtaining an electrochromic element having a larger light transmittance difference, the porosity of the near-electrode layer 15b is preferably 0.0% or more and 1.0% or less.

For obtaining an electrochromic element having a larger light transmittance difference, the difference between the porosity of the near-electrolyte layer 15a (Pi) and the porosity of the near-electrode layer 15b (P₂), P₁-P₂, is preferably 1.0% or more, more preferably 2.0% or more. For enhancing the adhesion between the oxidation color development layer 15 and the electrolyte layer 16, the difference Pi- P₂ is preferably 50.0% or less, more preferably 40.0% or less, still more preferably 35.0% or less. For obtaining an electrochromic element having high adhesion between the oxidation color development layer 15 and the electrolyte layer 16 and a higher light transmittance difference, the difference Pi- P₂ is preferably 1.0% or more and 50.0% or less, more preferably 2.0% or more and 40.0% or less, still more preferably 2.0% or more and 35.0% or less.

For increasing the speed in switching from a decolored state to a colored state and switching from a colored state to a decolored state (switching speed), the difference P₁-P₂ is preferably 2.0% or more and 50.0% or less, more preferably 3.0% or more and 40.0% or less, still more preferably 10.0% or more and 40.0% or less, even more preferably 20.0% or more and 40.0% or less, particularly preferably 25.0% or more and 35.0% or less.

For obtaining an electrochromic element having a larger light transmittance difference, it is preferable that a surface of the electrolyte layer 16 on the oxidation color development layer 15 side has an irregular shape as shown in FIG. 2. When a surface of the electrolyte layer 16 on the oxidation color development layer 15 side has an irregular shape, an electrochromic element further excellent in balance between the ion conductivity and the electron conductivity is obtained. The term "irregular shape" refers to a shape in which irregularities can be confirmed when a cross-section of the electrolyte layer 16 cut in the thickness direction is observed at a magnification of 300,000 times using a transmission electron microscope.

When the surface of the electrolyte layer 16 on the oxidation color development layer 15 side has an irregular shape in a photographed image of a cross-section for use in measurement of the porosity described later, a line (hereinafter, sometimes referred to as a "boundary line") indicating the interface between the oxidation color development layer 15 and the electrolyte layer 16 is as follows. That is, as shown in FIG. 2, the boundary line 20 is a series of points at which a distance (shortest distance) from a line segment 18 passing through the vertex of the highest projection 16b in the photographed image of the cross-section and orthogonally crossing the thickness direction of the electrolyte layer 16 and a distance (shortest distance) from a line segment 19 passing through the vertex of the lowest projection 16c in the photographed image of the cross-section and orthogonally crossing the thickness direction of the electrolyte layer 16 are equal to each other. In FIG. 2, the distance from the boundary line 20 to the line segment 18 and the distance from the boundary line 20 to the line segment 19 are equal to each other. When a surface of the first transparent electrode layer 12 on the oxidation color development layer 15 side has an irregular shape, the line indicating an interface between the oxidation color development layer 15 and the first transparent electrode layer 12 is determined in the same manner as described for the boundary line 20 above.

The configuration of the electrochromic element according to the first embodiment has been described above with reference to FIGS. 1 and 2, but the present invention is not limited to the examples described above. For example, an example in which the near-electrolyte layer 15a includes a plurality of needle-shaped structures 14a has been described above, but in the present invention, the shape of the near-electrolyte layer 15a is not limited as long as it is a region having a larger porosity over the near-electrode layer 15b. For example, the near-electrolyte layer 15a may include a plurality of columnar structures, or may include a sponge-shaped structure. The electrochromic element of the present invention may include a void structure layer on a part of the electrolyte layer 16 on the oxidation color development layer 15 side as the porosity of the near-electrolyte layer 15a increases. The void structure layer contributes to an increase in light transmittance difference of the electrochromic element.

In the present invention, an optical adjustment layer (for example, a niobium oxide layer) may be provided on the outer surface of the second transparent electrode layer 17. An example in which the layers are formed on the transparent support base material 11 has been described above, but in the present invention, the transparent support base material 11 is not a prerequisite constituent element.

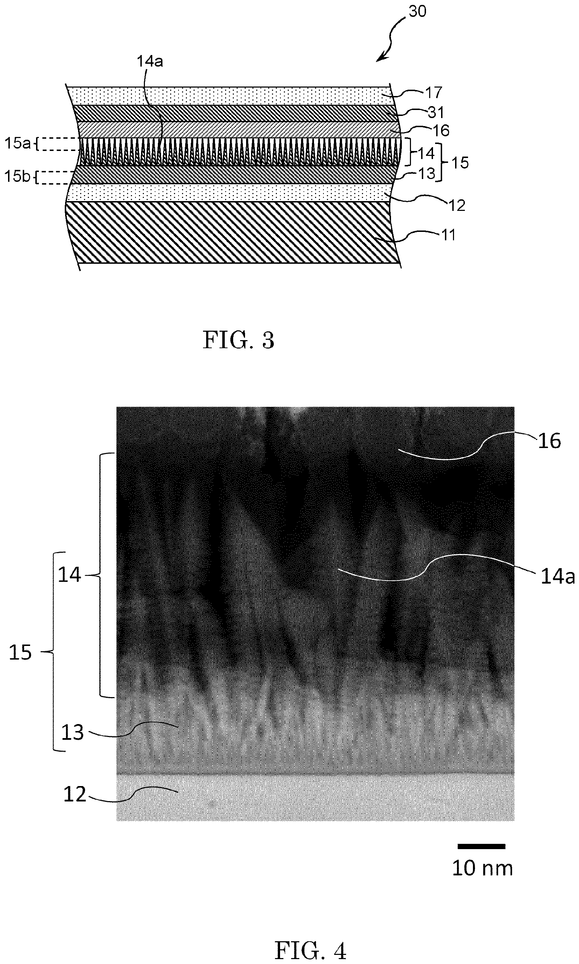

The electrochromic element of the present invention may further include a reduction color development layer. For example, the electrochromic element 30 shown in FIG. 3 includes a reduction color development layer 31 disposed between the electrolyte layer 16 and the second transparent electrode layer 17. The reduction color development layer 31 is reduced and colored in oxidation of the oxidation color development layer 15 during application of voltage. Accordingly, the electrochromic element 30 has a larger light transmittance difference. In addition, degradation of the second transparent electrode layer 17 can be suppressed by providing the reduction color development layer 31 between the electrolyte layer 16 and the second transparent electrode layer 17.

Next, the constituent elements of the electrochromic element according to the first embodiment will be described.

### [Transparent support base material 11]

The transparent support base material 11 is not particularly limited as long as it is transparent, and for example, a plate-shaped base material such as a glass plate or a film-shaped base material such as a polymer film can be used. The visible light transmittance of the transparent support base material 11 is preferably 80% or more, more preferably 90% or more. When a film-shaped base material is used as the transparent support base material 11, the electrochromic element according to the first embodiment can be manufactured by a roll-to-roll method, so that it is possible to improve the productivity of the electrochromic element.

In general, an electrochromic element obtained using a film-shaped base material tends to have a reduced light transmittance difference. However, since the electrochromic element according to the first embodiment is excellent in balance between ion conductivity and electron conductivity, the electrochromic element has a large light transmittance difference even if it is obtained using a film-shaped base material.

Examples of the material of the film-shaped base material include polyester (more specifically, polyethylene terephthalate, polyarylate, and the like), polyolefin, cyclic polyolefin (more specifically, norbornene-based polyolefin and the like), polycarbonate, and polyether sulfone.

The thickness of the transparent support base material 11 is not particularly limited, and is, for example, 1 µm or more and 2 mm or less, preferably 2 µm or more and 1,000 µm or less, more preferably 10 µm or more and 1,000 µm or less.

### [First transparent electrode layer 12 and second transparent electrode layer 17]

The materials for forming the first transparent electrode layer 12 and the second transparent electrode layer 17 are not particularly limited as long as they are transparent conductive materials. The first transparent electrode layer 12 and the second transparent electrode layer 17 may be formed of the same kind of transparent conductive material, or different kinds of transparent conductive materials.

The transparent conductive material for forming the first transparent electrode layer 12 and the second transparent electrode layer 17 is not particularly limited, and examples thereof include oxides of one or more metals (or semimetals) selected from the group consisting of indium, tin, zinc, gallium, antimony, titanium, silicon, zirconium, magnesium, aluminum, gold, silver, copper, palladium and tungsten. From the viewpoint of reducing the resistance, the transparent conductive material is preferably a composite of oxides of a plurality of metals (or semimetals) (composite oxide), more preferably a composite oxide containing indium oxide as a main component. From the viewpoint of achieving both high transparency and low resistance, the transparent conductive material is particularly preferably a composite oxide of indium and tin (ITO). When ITO is used as the transparent conductive material, the content ratio of tin with respect to the total amount of ITO is preferably 8 wt% or more and 30 wt% or less from the viewpoint of achieving both high transparency and low resistance.

For achieving both high transparency and low resistance, the thickness of the first transparent electrode layer 12 and the thickness of the second transparent electrode layer 17 are preferably 30 nm or more and 200 nm or less, more preferably 40 nm or more and 100 nm or less. The thickness of the first transparent electrode layer 12 and the thickness of the second transparent electrode layer 17 may be the same or different.

### [Oxidation color development layer 15]

The oxidation color development layer 15 is a layer formed of a composite oxide of nickel and metal elements (hereinafter, sometimes referred to as "dope elements") other than nickel, or a layer formed of a composite hydroxide of nickel and dope elements. For example, if a target containing nickel and dope elements is used for forming the oxidation color development layer 15 on the first transparent electrode layer 12 by a sputtering method, the porosity of the near-electrolyte layer 15a tends to be larger than the porosity of the near-electrode layer 15b. For obtaining an electrochromic element having a larger light transmittance difference, the oxidation color development layer 15 is preferably a layer formed of a composite oxide of nickel and dope elements, more preferably a layer formed of a composite oxide of nickel and aluminum.

The oxidation color development layer 15 is colored by oxidation during application of voltage. For example, during application of voltage, cations (more specifically, protons, ions of dope elements and the like) move from the oxidation color development layer 15 to the electrolyte layer 16, and simultaneously, electrons move from the oxidation color development layer 15 to the first transparent electrode layer 12. Accordingly, the constituent material of the oxidation color development layer 15 is oxidized, so that the oxidation color development layer 15 is colored. The applied voltage in coloring the oxidation color development layer 15 is in the range of, for example, 0.001 V/cm² or more and 4 V/cm² or less. The time of application of voltage in coloring the oxidation color development layer 15 is in the range of, for example, 1 second or more and 1,200 seconds or less. If the oxidation color development layer 15 is a composite oxide layer and the oxidation color development layer 15 is colored by proton transfer, examples of the proton source include hydroxyl groups on the surface of the composite oxide in the oxidation color development layer 15 and water deposited on the surface of the composite oxide in the oxidation color development layer 15.

For obtaining an electrochromic element having a larger light transmittance difference, the dope element is preferably one or more selected from the group consisting of Group 1 elements, Group 4 elements, Group 5 elements, Group 6 elements, Group 7 elements, Group 9 elements, Group 11 elements, Group 13 elements and Group 14 elements of the periodic table.

For obtaining an electrochromic element having a still larger light transmittance difference, the doping element is preferably one or more selected from the group consisting of lithium, sodium, potassium, titanium, zirconium, vanadium, niobium, chromium, molybdenum, manganese, cobalt, rhodium, iridium, copper, aluminum and silicon, more preferably one or more selected from the group consisting of zirconium, iridium, aluminum and silicon, still more preferably one or more selected from the group consisting of zirconium, aluminum and silicon, still more preferably aluminum.

For obtaining an electrochromic element having a larger light transmittance difference, the atomic composition ratio of nickel to the dope element (nickel/dope element) is preferably 80/20 or more and 99/1 or less, more preferably 85/15 or more and 95/5 or less.

The atomic composition ratio (nickel/dope element) of the near-electrolyte layer 15a and the atomic composition ratio (nickel/dope element) of the near-electrode layer 15b may be the same or different. The dope element of the near-electrolyte layer 15a and the dope element of the near-electrode layer 15b may be the same or different.

For obtaining an electrochromic element having a larger light transmittance difference, the content ratio of oxygen in the oxidation color development layer 15 is preferably 50 atom% or more and 55 atom% or less, more preferably 51 atom% or more and 54 atom% or less, based on 100 atom% of the total of nickel, the dope element, oxygen and hydrogen.

For obtaining an electrochromic element having a larger light transmittance difference, the thickness of the oxidation color development layer 15 is preferably 20 nm or more and 200 nm or less, more preferably 30 nm or more and 200 nm or less, still more preferably 40 nm or more and 100 nm or less, even more preferably 50 nm or more and 90 nm or less.

The oxidation color development layer 15 may contain a small amount of elements (elements other than nickel, dope elements, oxygen and hydrogen) such as carbon and nitrogen taken from a raw material during film formation, the transparent support base material 11, and the external environment. The content ratio of elements other than nickel, dope elements, oxygen and hydrogen in the oxidation color development layer 15 can be measured by, for example, X-ray photoelectron spectroscopy. The total content ratio of nickel, dope elements, oxygen and hydrogen, among the elements forming the oxidation color development layer 15, is preferably 90 atom% or more, more preferably 95 atom% or more, still more preferably 97 atom% or more, and may be 99 atom% or more, 99.5 atom% or more, or 99.9 atom% or more.

### [Electrolyte layer 16]

The electrolyte layer 16 is not particularly limited as long as it is a layer through which cations can move, and examples thereof include oxide layers, hydroxide layers, nitride layers, and fluoride layers.

For obtaining an electrochromic element having a larger light transmittance difference when the electrolyte layer 16 is an oxide layer, a hydroxide layer, a nitride layer, or a fluoride layer, the electrolyte layer 16 is preferably a layer containing one or more elements selected from the group consisting of aluminum, silicon, tantalum, yttrium, calcium, magnesium, titanium, zirconium and lithium, more preferably a layer containing one or more elements selected from the group consisting of aluminum, silicon, titanium and zirconium, still more preferably a layer formed of an oxide containing one or more elements selected from the group consisting of aluminum, silicon and zirconium, particularly preferably a layer formed of a composite oxide of aluminum and silicon.

For obtaining an electrochromic element having a larger light transmittance difference when the electrolyte layer 16 is a layer formed of a composite oxide of aluminum and silicon, the atomic composition ratio of aluminum to silicon (aluminum/silicon) is preferably 70/30 or more and 90/10 or less, more preferably 75/25 or more and 85/15 or less.

For obtaining an electrochromic element having a larger light transmittance difference, the thickness of the electrolyte layer 16 is preferably 50 nm or more and 200 nm or less, more preferably 70 nm or more and 150 nm or less, still more preferably 80 nm or more and 120 nm or less.

### [Reduction color development layer 31]

The constituent material of the reduction color development layer 31 is not particularly limited as long as the material is reduced and colored in oxidation of the oxidation color development layer 15 during application of voltage. Examples of the constituent material of the reduction color development layer 31 include metal oxides such as tungsten oxide (WO₃), molybdenum oxide (MoOs), niobium oxide (Nb₂O₅), titanium oxide (TiO₂), copper oxide (CuO), chromium oxide (Cr₂O₃), manganese oxide (Mn₂O₃), vanadium oxide (V₂O₅), and cobalt oxide (Co₂O₃). The constituent material of the reduction color development layer 31 may be a composite oxide in which any of the metal oxides listed above is doped with another metal element (more specifically, lithium, sodium, potassium or the like).

For obtaining an electrochromic element having a larger light transmittance difference, the reduction color development layer 31 is preferably a layer formed of tungsten oxide (WO₃) (tungsten oxide layer).

For obtaining an electrochromic element having a larger light transmittance difference, the thickness of the reduction color development layer 31 is preferably 100 nm or more and 300 nm or less, more preferably 150 nm or more and 250 nm or less, still more preferably 180 nm or more and 220 nm or less.

For obtaining an electrochromic element having a larger light transmittance difference, it is preferable to satisfy the following condition 1, it is more preferable to satisfy the following condition 2, and it is still more preferable to satisfy the following condition 3.

Condition 1: the near-electrolyte layer 15a includes a plurality of needle-shaped structures 14a, and a surface of the electrolyte layer 16 on the oxidation color development layer 15 side has an irregular shape.

Condition 2: the condition 1 is satisfied, and the oxidation color development layer 15 is a layer formed of a composite oxide of nickel and aluminum.

Condition 3: the condition 2 is satisfied, and the electrolyte layer 16 is a layer formed of a composite oxide of aluminum and silicon.

### <Second embodiment: method for manufacturing electrochromic element>

Next, a method for manufacturing an electrochromic element according to a second embodiment of the present invention will be described. The method for manufacturing an electrochromic element according to the second embodiment is a preferred method for manufacturing the electrochromic element according to the first embodiment described above. Thus, descriptions of constituent elements overlapping with those of the first embodiment may be omitted. In the following description, the term "on" is irrelevant to the direction in a sputtering apparatus, and is synonymous with "in contact with".

The method for manufacturing an electrochromic element according to the second embodiment includes at least the steps of forming an oxidation color development layer on the first transparent electrode layer by a sputtering method, and forming an electrolyte layer on the oxidation color development layer by a sputtering method. Hereinafter, as an example of the method for manufacturing an electrochromic element according to the second embodiment, a method for manufacturing the electrochromic element 30 will be described mainly with reference to FIG. 3. Hereinafter, the type of the sputtering method is not particularly limited, and various sputtering methods such as DC sputtering (sputtering method in which a film is formed by applying a DC voltage between two electrodes), RF sputtering (sputtering method in which a film is formed by applying an AC voltage between two electrodes), pulse sputtering, and dual magnetron sputtering can be employed depending on a target used. The film formation rate is, for example, 1 nm/sec or more and 20 nm/sec or less, preferably 3 nm/sec or more and 15 nm/sec or less. The temperature of a transparent support base material 11 during film formation is, for example, -20°C or higher and 500°C or lower.

### [Step of forming first transparent electrode layer 12]

First, a first transparent electrode layer 12 is formed on the transparent support base material 11 by a sputtering method. When a metal oxide (composite metal oxide) is used as a constituent material of the first transparent electrode layer 12, the target may be a metal (alloy) target or a metal oxide (composite metal oxide) target.

In formation of the first transparent electrode layer 12, an inert gas such as argon is introduced as a sputtering gas into a sputtering apparatus. As the sputtering gas, oxygen may be introduced in addition to the inert gas. For example, when argon is used as the sputtering gas, it is preferable that the flow rate thereof is set within the range of 5.0 sccm or more and 15.0 sccm or less. When oxygen is used as the sputtering gas, it is preferable that the flow rate of the oxygen is set within the range of 1.0 sccm or more and 2.0 sccm or less. It is preferable that the internal pressure of the sputtering apparatus in formation of the first transparent electrode layer 12 is set within the range of 0.1 Pa or more and 1.0 Pa or less.

### [Step of forming oxidation color development layer 15]

Next, an oxidation color development layer 15 is formed on the first transparent electrode layer 12 by a sputtering method. The target for forming the oxidation color development layer 15 may be an alloy target of nickel and a doping element, or may be a composite oxide target containing nickel and a doping element. The oxidation color development layer 15 may be formed by a co-sputtering method using a target containing nickel and a target containing dope elements.

In formation of the oxidation color development layer 15, an inert gas such as argon is introduced as a sputtering gas into a sputtering apparatus. As the sputtering gas, oxygen may be introduced in addition to the inert gas. When a hydroxide layer is formed as the oxidation color development layer 15, water vapor may be introduced as the sputtering gas. For example, when argon is used as the sputtering gas, it is preferable that the flow rate thereof is set within the range of 5.0 sccm or more and 15.0 sccm or less. When oxygen is used as the sputtering gas, it is preferable that the flow rate of the oxygen is set within the range of 0.2 sccm or more and 2.0 sccm or less. When water vapor is used as the sputtering gas, it is preferable that the flow rate of the water vapor is set within the range of 0.5 sccm or more and 2.0 sccm or less. It is preferable that the internal pressure of the sputtering apparatus in formation of the oxidation color development layer 15 is set within the range of 0.5 Pa or more and 1.5 Pa or less.

The atomic composition ratio between nickel and the dope element in the oxidation color development layer 15 can be adjusted by changing the atomic composition ratio of the target. The atomic composition ratio between nickel and the dope element in the oxidation color development layer 15 is substantially the same as that in the target.

When the oxidation color development layer 15 is formed on the first transparent electrode layer 12 by a sputtering method using a target containing nickel and a dope element, there is a tendency that at an early stage of film formation, a dense layer 13 having a thickness of, for example, 10 nm or more and 50 nm or less is formed, followed by formation of needle-shaped structure layer 14 on the dense layer 13. The sputtering conditions in formation of the dense layer 13 and the sputtering conditions in formation of the needle-shaped structure layer 14 may be the same or different. That is, the dense layer 13 and the needle-shaped structure layer 14 may be continuously formed under the same sputtering conditions, or the dense layer 13 may be formed to a desired thickness, followed by formation of the needle-shaped structure layer 14 with the sputtering conditions changed.

Both the thickness ratio between the dense layer 13 and the needle-shaped structural layer 14 and the porosity of the needle-shaped structural layer 14 can be adjusted by changing at least one of the constituent material of the transparent support base material 11, the constituent material of the first transparent electrode layer 12, the atomic composition ratio of the target, the type of the dope element, and the sputtering conditions (more specifically, the type of the sputtering gas, the flow rate of the sputtering gas, the internal pressure of the sputtering apparatus and the like).

### [Step of forming electrolyte layer 16]

Next, an electrolyte layer 16 is formed on the oxidation color development layer 15 by a sputtering method. The target and sputtering conditions for forming the electrolyte layer 16 may be appropriately set according to a desired electrolyte layer 16.

For example, when an alloy containing aluminum and silicon is used as a target for forming the electrolyte layer 16, it is preferable that argon (flow rate: in the range of 5.0 sccm or more and 15.0 sccm or less) and oxygen (flow rate: in the range of 1.0 sccm or more and 2.0 sccm or less) are used as sputtering gases, and the internal pressure of the sputtering apparatus is set in the range of 0.1 Pa or more and 1.0 Pa or less. By setting the above-described conditions, a layer formed of a composite oxide of aluminum and silicon can be formed as the electrolyte layer 16.

When silicon or zirconium is used as a target for forming the electrolyte layer 16, it is preferable that argon (flow rate: in the range of 5.0 sccm or more and 15.0 sccm or less) and oxygen (flow rate: in the range of 1.0 sccm or more and 2.0 sccm or less) are used as sputtering gases, and the internal pressure of the sputtering apparatus is set in the range of 0.5 Pa or more and 1.5 Pa or less. By setting the above-described conditions, a layer formed of an oxide of silicon or an oxide of zirconium can be formed as the electrolyte layer 16.

When the electrolyte layer 16 is formed on the needle-shaped structure layer 14 by a sputtering method, the electrolyte layer 16 tends to be formed in which a surface on the oxidation color development layer 15 side (specifically a surface on the needle-shaped structure layer 14 side) has an irregular shape.

### [Step of forming reduction color development layer 31]

Next, a reduction color development layer 31 is formed on the electrolyte layer 16 by a sputtering method. The target and sputtering conditions for forming the reduction color development layer 31 may be appropriately set according to a desired reduction color development layer 31.

For example, when tungsten oxide (WO₃) is used as a target for forming the reduction color development layer 31, it is preferable that argon (flow rate: in the range of 5.0 sccm or more and 15.0 sccm or less) and oxygen (flow rate: in the range of 5.0 sccm or more and 10.0 sccm or less) are used as sputtering gases, and the internal pressure of the sputtering apparatus is set in the range of 0.5 Pa or more and 1.5 Pa or less. By setting the above-described conditions, a tungsten oxide layer can be formed as the reduction color development layer 31.

### [Step of forming second transparent electrode layer 17]

Next, a second transparent electrode layer 17 is formed on the reduction color development layer 31 by a sputtering method. For example, the target and sputtering conditions for forming the second transparent electrode layer 17 are the same as the above-described target and sputtering conditions for forming the first transparent electrode layer 12.

The electrochromic element 30 shown in Fig. 3 is obtained by passing through the steps described above.

The method for manufacturing an electrochromic element according to the second embodiment has been described above with reference to FIG. 3, but the present invention is not limited to the examples described above. For example, in the present invention, the second transparent electrode layer 17 may be formed on the electrolyte layer 16 without forming the reduction color development layer 31.

### EXAMPLES

Hereinafter, the present invention will be described more in detail by showing production examples of electrochromic elements, but the present invention is not limited to the following examples.

### <Production of electrochromic element of Example 1>

On a glass plate (size: 50 mm × 50 mm, thickness: 1,000 µm) as a transparent support base material, a first transparent electrode layer formed of ITO, an oxidation color development layer formed of a composite oxide of nickel (Ni) and aluminum (Al), an electrolyte layer formed of a composite oxide of Al and silicon (Si), a reduction color development layer formed of tungsten oxide, and a second transparent electrode layer formed of ITO were deposited in this order by a sputtering method to obtain an electrochromic element of Example 1. Sputtering conditions for the layers are shown below.

### [Sputtering conditions for first transparent electrode layer]

Sputtering method: RF sputtering (output: 120 W)
Base material temperature: 25°C
Target: ITO containing tin (Sn) at a content ratio of 10 wt%
Sputtering gas: argon (flow rate: 10.0 sccm)
Pressure: 0.4 Pa
Sputtering treatment time: 10 sec
Thickness of first transparent electrode layer after sputtering treatment: 80 nm

### [Sputtering conditions for oxidation color development layer]

Sputtering method: DC sputtering (output: 100 W)
Base material temperature: 25°C
Target: alloy containing Ni and Al (atomic composition ratio: Ni/Al = 90/10)
Sputtering gas: argon (flow rate: 10.0 sccm) and oxygen (flow rate: 1.6 sccm)
Pressure: 1.1 Pa
Sputtering treatment time: 9 sec
Thickness of oxidation color development layer after sputtering treatment: 70 nm

### [Sputtering conditions for electrolyte layer]

Sputtering method: DC sputtering (output: 100 W)
Base material temperature: 25°C
Target: alloy containing Al and Si (atomic composition ratio: Al/Si = 80/20)
Sputtering gas: argon (flow rate: 10.0 sccm) and oxygen (flow rate: 1.3 sccm)
Pressure: 0.4 Pa
Sputtering treatment time: 15 sec
Thickness of electrolyte layer after sputtering treatment: 100 nm

### [Sputtering conditions for reduction color development layer]

Sputtering method: DC sputtering (output: 160 W)
Base material temperature: 25°C
Target: tungsten oxide (WO₃)
Sputtering gas: argon (flow rate: 10.0 sccm) and oxygen (flow rate: 7.0 sccm)
Pressure: 1.3 Pa
Sputtering treatment time: 16 sec
Thickness of reduction color development layer after sputtering treatment: 200 nm

### [Sputtering conditions for second transparent electrode layer]

Sputtering method: RF sputtering (output: 120 W)
Base material temperature: 25°C
Target: ITO containing Sn at a content ratio of 10 wt%
Sputtering gas: argon (flow rate: 10.0 sccm)
Pressure: 0.4 Pa
Sputtering treatment time: 10 sec
Thickness of second transparent electrode layer after sputtering treatment: 80 nm

### <Production of electrochromic element of Example 2>

An electrochromic element of Example 2 was produced in the same manner as in Example 1 except that instead of the glass plate, a polyethylene terephthalate (PET) film (manufactured by Mitsubishi Chemical Corporation, size: 50 mm × 50 mm, thickness: 50 µm) was used as a transparent support base material.

### <Production of electrochromic element of Example 3>

An electrochromic element of Example 3 was produced in the same manner as in Example 1 except that the sputtering conditions for the electrolyte layer were changed to the conditions shown below.

### [Sputtering conditions for electrolyte layer in Example 3]

Sputtering method: DC sputtering (output: 100 W)
Base material temperature: 25°C
Target: Si
Sputtering gas: argon (flow rate: 10.0 sccm) and oxygen (flow rate: 1.6 sccm)
Pressure: 1.1 Pa
Sputtering treatment time: 25 sec
Thickness of electrolyte layer after sputtering treatment: 100 nm

### <Production of electrochromic element of Example 4>

An electrochromic element of Example 4 was produced in the same manner as in Example 1 except that the sputtering conditions for the electrolyte layer were changed to the conditions shown below.

### [Sputtering conditions for electrolyte layer in Example 4]

Sputtering method: DC sputtering (output: 100 W)
Base material temperature: 25°C
Target: zirconium (Zr)
Sputtering gas: argon (flow rate: 10.0 sccm) and oxygen (flow rate: 1.6 sccm)
Pressure: 1.1 Pa
Sputtering treatment time: 20 sec
Thickness of electrolyte layer after sputtering treatment: 100 nm

### <Production of electrochromic element of Example 5>

An electrochromic element of Example 5 was produced in the same manner as in Example 1 except that the sputtering conditions for the oxidation color development layer were changed to the conditions shown below.

### [Sputtering conditions for oxidation color development layer in Example 5]

Sputtering method: DC sputtering (output: 100 W)
Base material temperature: 25°C
Target: alloy containing Ni and Al (atomic composition ratio: Ni/Al = 90/10)
Sputtering gas: argon (flow rate: 10.0 sccm), oxygen (flow rate: 0.4 sccm) and water vapor (flow rate: 1.2 sccm)
Pressure: 1.1 Pa
Sputtering treatment time: 10 sec
Thickness of oxidation color development layer after sputtering treatment (oxidation color development layer formed of composite hydroxide of Ni and Al): 70 nm

### <Production of electrochromic element of Example 6>

An electrochromic element of Example 6 was produced in the same manner as in Example 1 except that the sputtering conditions for the oxidation color development layer were changed to the conditions shown below.

### [Sputtering conditions for oxidation color development layer in Example 6]

Sputtering method: DC sputtering (output: 100 W)
Base material temperature: 25°C
Target: alloy containing Ni and Zr (atomic composition ratio: Ni/Zr = 90/10)
Sputtering gas: argon (flow rate: 10.0 sccm) and oxygen (flow rate: 1.6 sccm)
Pressure: 1.1 Pa
Sputtering treatment time: 9 sec
Thickness of oxidation color development layer after sputtering treatment (oxidation color development layer formed of composite oxide of Ni and Zr): 70 nm

### <Production of electrochromic element of Example 7>

An electrochromic element of Example 7 was produced in the same manner as in Example 1 except that the sputtering conditions for the oxidation color development layer were changed to the conditions shown below.

### [Sputtering conditions for oxidation color development layer in Example 7]

Sputtering method: DC sputtering (output: 100 W)
Base material temperature: 25°C
Target: alloy containing Ni and Si (atomic composition ratio: Ni/Si = 90/10)
Sputtering gas: argon (flow rate: 10.0 sccm) and oxygen (flow rate: 1.6 sccm)
Pressure: 1.1 Pa
Sputtering treatment time: 9 sec
Thickness of oxidation color development layer after sputtering treatment (oxidation color development layer formed of composite oxide of Ni and Si): 70 nm

### <Production of electrochromic element of Example 8>

An electrochromic element of Example 8 was produced in the same manner as in Example 1 except that the oxidation color development layer was formed under the same sputtering conditions as in Example 7, and the electrolyte layer was formed under the same sputtering conditions as in Example 3.

### <Production of electrochromic element of Comparative Example 1>

An electrochromic element of Comparative Example 1 was produced in the same manner as in Example 1 except that instead of the glass plate, a PET film (manufactured by Mitsubishi Chemical Corporation, size: 50 mm × 50 mm, thickness: 50 µm) was used as a transparent support base material, and the second transparent electrode layer, the reduction color development layer, the electrolyte layer, the oxidation color development layer and the first transparent electrode layer were formed in this order.

### <Production of electrochromic element of Comparative Example 2>

An electrochromic element of Comparative Example 2 was produced in the same manner as in Example 8 except that the second transparent electrode layer, the reduction color development layer, the electrolyte layer, the oxidation color development layer and the first transparent electrode layer were formed in this order.

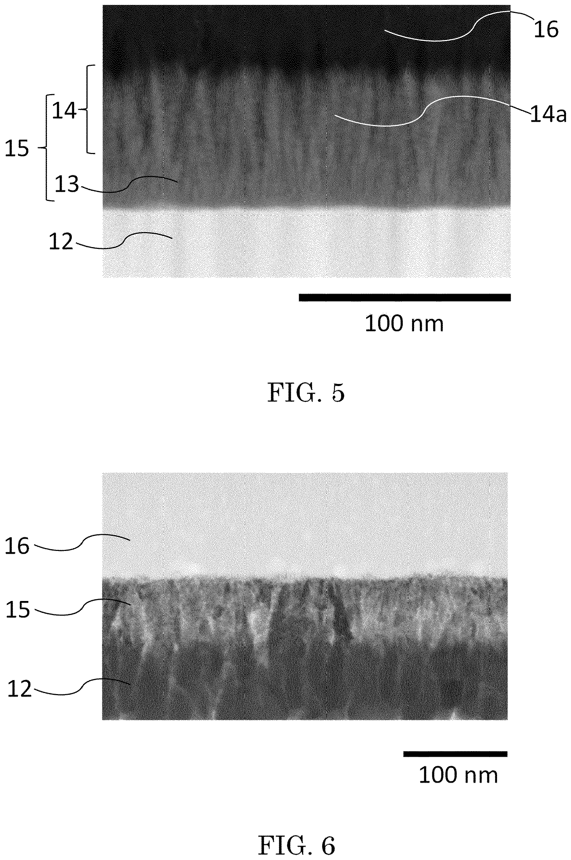

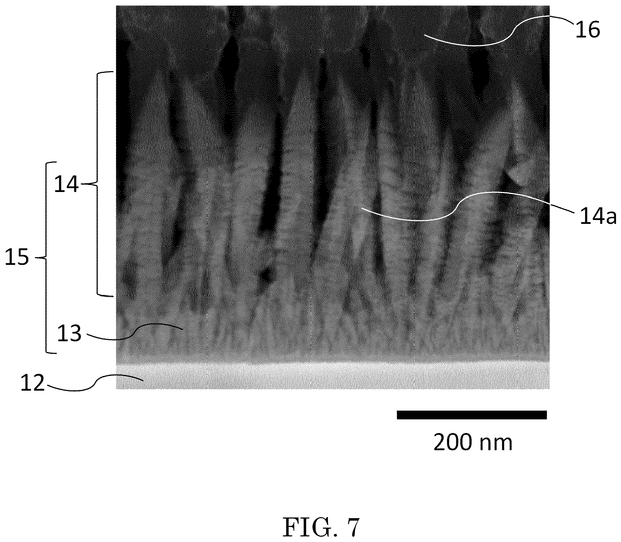

Photographs of cross-sections of the electrochromic elements of Example 1, Example 2, Comparative Example 1 and Example 8 which were taken using a transmission electron microscope ("JEM-2800" manufactured by JEOL Ltd.) are shown in FIG. 4 (Example 1), FIG. 5 (Example 2), FIG. 6 (Comparative Example 1) and FIG. 7 (Example 8), respectively. In the electrochromic elements of Examples 1, 2 and 8, an oxidation color development layer 15 had a dense layer 13 disposed on the first transparent electrode layer 12 side and a needle-shaped structure layer 14 disposed on the electrolyte layer 16 side as shown in FIGS. 4, 5 and 7. The needle-shaped structure layer 14 included a plurality of needle-shaped structures 14a. In the electrochromic elements of Examples 1, 2 and 8, a surface of the electrolyte layer 16 on the oxidation color development layer 15 side had an irregular shape. On the other hand, in the electrochromic element of Comparative Example 1, the oxidation color development layer 15 disposed between the first transparent electrode layer 12 and the electrolyte layer 16 was a single layer (dense layer) as shown in FIG. 6.

### <Measurement of porosity>

The porosity of each of the near-electrolyte layer and the near-electrode layer in the oxidation color development layer of each electrochromic element was measured by the following procedure. The near-electrolyte layer is a region extending up to 10 nm in the thickness direction of the oxidation color development layer from an interface between the oxidation color development layer and the electrolyte layer. The near-electrode layer is a region extending up to 10 nm in the thickness direction of the oxidation color development layer from the interface between the oxidation color development layer and the first transparent electrode layer.

First, a cross-section of each electrochromic element was photographed at a photographing magnification of 300,000 times using a transmission electron microscope ("JEM-2800" manufactured by JEOL Ltd.) to obtain a photographed cross-section image. Subsequently, for dividing the photographed cross-section image into dark regions indicating voids and light regions indicating regions that are not voids, the photographed cross-section image was binarized under the following conditions using image processing software ("ImageJ" manufactured by National Institutes of Health). By the binarization, the photographed cross-section image was divided into dark regions having a luminance value of 0 or more and 14 or less and bright regions having a luminance value of more than 14.

### [Binarization conditions]

Image type: 8 bits
Maximum value of threshold of luminance value: 14
Minimum value of threshold of luminance value: 0

Subsequently, for each of the near-electrolyte layer and the near-electrode layer in the binarized photographed cross-section image, the porosity f 100 × total area of dark regions/(total area of light regions + total area of dark regions)} was measured using image processing software ("ImageJ" manufactured by National Institutes of Health). The measurement region of the porosity was 10 nm in length in a thickness direction and 400 nm in length in a direction orthogonal to the thickness direction for both the near-electrolyte layer and the near-electrode layer.

### <Evaluation>

Hereinafter, methods for evaluating the electrochromic elements of Examples 1 to 8, Comparative Examples 1 and 2 will be described.

### [Light transmittance difference]

First, for each electrochromic element before application of voltage (decolored state), the transmittance of light having a wavelength of 550 nm was measured using a spectrophotometer ("U-4100" manufactured by Hitachi High-Tech Corporation). Hereinafter, the light transmittance measured here is referred to as LT1.

Subsequently, a voltage of 1 V/cm² was applied between the first transparent electrode layer and the second transparent electrode layer of each electrochromic element for 120 seconds to bring each electrochromic element into a colored state. In each electrochromic element in a colored state, the oxidation color development layer was colored in brown, and the reduction color development layer was colored in blue. Subsequently, for each electrochromic element in a colored state, the transmittance of light having a wavelength of 550 nm was measured using a spectrophotometer ("U-4100" manufactured by Hitachi High-Tech Corporation). Hereinafter, the light transmittance measured here is referred to as LT2.

The light transmittance difference (LT1 - LT2) of each electrochromic element was calculated. An electrochromic element having a light transmittance difference of 70% or more was "excellent in light control performance because of a large light transmittance difference". On the other hand, an electrochromic element having a light transmittance difference of less than 70% was "not excellent in light control performance because of a small light transmittance difference".

### [Switching Speed]

A voltage of 1 V/cm² was applied between the first transparent electrode layer and the second transparent electrode layer of each electrochromic element before application of voltage (in a decolored state), and the light transmittance (specifically, the transmittance of light having a wavelength of 550 nm) of the electrochromic element was measured at intervals of 1 second from the start of application voltage using a spectrophotometer ("U-4100 " manufactured by Hitachi High-Tech Corporation). The time until the light transmittance became 20% or less after the start of application of voltage (switching time) was measured. When the switching time was less than 5 seconds, score "A" was given (the switching speed was extremely large). When the switching time was 5 seconds or more and less than 20 seconds, score "B" was given (the switching speed was large). When the switching time was 20 seconds or more, score "C" was given (the switching speed was small).

Table 1 shows the results of evaluation of the porosity of the near-electrolyte layer, the porosity of the near-electrode layer, the porosity difference (porosity of near-electrolyte layer - porosity of near-electrode layer), the light transmittance difference and the switching speed for each electrochromic element. In all of the electrochromic elements of Examples 1 to 8, the total content ratio of nickel, the dope element, oxygen and hydrogen among the elements forming the oxidation color development layer was 99 atom% or more.

**[Table 1]**

| | Porosity[%] | | Porosity difference [%] | Light transmittance difference [%] | Switching speed |
|---|---|---|---|---|---|
| | Near-electrolyte layer | Near-electrode layer | | | |
| Example 1 | 30.9 | 0.0 | 30.9 | 78 | A |
| Example 2 | 2.8 | 0.0 | 2.8 | 74 | B |
| Example 3 | 29.3 | 0.0 | 29.3 | 76 | A |
| Example 4 | 29.6 | 0.0 | 29.6 | 77 | A |
| Example 5 | 29.5 | 0.0 | 29.5 | 76 | A |
| Example 6 | 30.7 | 0.0 | 30.7 | 76 | A |
| Example 7 | 29.8 | 0.0 | 29.8 | 75 | A |
| Example 8 | 30.2 | 0.0 | 30.2 | 75 | A |
| Comparative Example 1 | 0.0 | 0.0 | 0.0 | 60 | C |
| Comparative Example 2 | 0.0 | 0.0 | 0.0 | 57 | C |

As shown in Table 1, in Examples 1 to 8, the porosity of the near-electrolyte layer was larger than the porosity of the near-electrode layer. In Examples 1 to 8, the light transmittance difference was 70% or more. Thus, the electrochromic elements of Examples 1 to 8 was excellent in light control performance because of a large light transmittance difference.

In Comparative Examples 1 and 2, the values of the porosity of the near-electrolyte layer and the porosity of the near-electrode layer were equal to each other (0.0%) as shown in Table 1. In Comparative Examples 1 and 2, the light transmittance difference was less than 70%. Thus, the electrochromic elements of Comparative Examples 1 and 2 were not excellent in light control performance because of a small light transmittance difference.

From the above results, it was demonstrated that the electrochromic elements according to the present invention were excellent in light control performance because of a large light transmittance difference.

### DESCRIPTION OF REFERENCE SIGNS

- 10, 30: electrochromic element
- 12: first transparent electrode layer
- 14a: needle-shaped structure
- 15: oxidation color development layer
- 15a: near-electrolyte layer
- 15b: near-electrode layer
- 16: electrolyte layer
- 17: second transparent electrode layer
- 31: reduction color development layer

## Claims

1. An electrochromic element in which a light transmittance changes depending on a voltage applied, the electrochromic element comprising a first transparent electrode layer, an oxidation color development layer, an electrolyte layer and a second transparent electrode layer in this order, wherein
the first transparent electrode layer and the oxidation color development layer are in contact with each other,
the oxidation color development layer and the electrolyte layer are in contact with each other, and
the oxidation color development layer is an oxide layer or a hydroxide layer, and contains nickel as a main component, and metal elements other than nickel, and
the oxidation color development layer has a thickness of 20 nm or more, and
in the oxidation color development layer, a porosity of a near-electrolyte layer extending up to 10 nm in a thickness direction from an interface with the electrolyte layer is larger than a porosity of a near-electrode layer extending up to 10 nm in the thickness direction from the interface with the first transparent electrode layer.

2. The electrochromic element according to claim 1, wherein the oxidation color development layer contains one or more elements selected from the group consisting of Group 1 elements, Group 4 elements, Group 5 elements, Group 6 elements, Group 7 elements, Group 9 elements, Group 11 elements, Group 13 elements and Group 14 elements of the periodic table as the metal elements other than nickel.

3. The electrochromic element according to claim 2, wherein the oxidation color development layer contains one or more elements selected from the group consisting of lithium, sodium, potassium, titanium, zirconium, vanadium, niobium, chromium, molybdenum, manganese, cobalt, rhodium, iridium, copper, aluminum and silicon as the metal elements other than nickel.

4. The electrochromic element according to any one of claims 1 to 3, wherein the near-electrolyte layer comprises a plurality of needle-shaped structures.

5. The electrochromic element according to any one of claims 1 to 3, wherein a surface of the electrolyte layer on the oxidation color development layer side has an irregular shape.

6. The electrochromic element according to any one of claims 1 to 3, wherein a difference between the porosity of the near-electrolyte layer Pi and the porosity of the near-electrode layer P₂, P₁-P₂, is 1.0% or more.

7. The electrochromic element according to any one of claims 1 to 3, further comprising a reduction color development layer disposed between the electrolyte layer and the second transparent electrode layer.

8. The electrochromic element according to claim 7, wherein the reduction color development layer is a tungsten oxide layer.

9. The electrochromic element according to any one of claims 1 to 3, wherein the electrolyte layer is an oxide layer, a hydroxide layer, a nitride layer, or a fluoride layer, and contains one or more elements selected from the group consisting of aluminum, silicon, tantalum, yttrium, calcium, magnesium, titanium, zirconium and lithium.

10. A method for manufacturing the electrochromic element according to any one of claims 1 to 3, the method comprising the steps of
forming the oxidation color development layer on the first transparent electrode layer by a sputtering method; and
forming the electrolyte layer on the oxidation color development layer by a sputtering method.
